# EUROPEAN PATENT SPECIFICATION

(11) **EP 4 245 510 B1**
(45) Date of publication and mention of the grant of the patent: **30.09.2026**
(21) Application number: 22162198.0
(22) Date of filing: 15.03.2022
(51) Int. Cl.: B29C 70/44, B29C 70/48, B29C 33/00, B29C 70/54, B29D 99/00, B29C 31/04, B29L 31/08

(54) **APPARATUS, SYSTEM AND METHOD FOR MANUFACTURING A WIND TURBINE BLADE**
GERÄT, SYSTEM UND VERFAHREN ZUR HERSTELLUNG EINER WINDTURBINENSCHAUFEL
APPAREIL, SYSTÈME ET PROCÉDÉ DE FABRICATION D'UNE PALE D'ÉOLIENNE

(43) Date of publication of application: 20.09.2023
(73) Proprietor: LM Wind Power A/S, 6000 Kolding (DK)
(72) Inventor: Nielsen, Lars, 6000 Kolding (DK)
(74) Representative: Zimmermann & Partner Patentanwälte mbB

(56) References cited:
- CN-U- 214 000 632
- US-A1- 2012 024 457
- US-A1- 2014 333 008
- US-A1- 2021 101 351

## Description

### FIELD OF INVENTION

The disclosure herein relates to apparatuses, systems and methods for manufacturing a wind turbine blade, particularly to apparatuses, systems and methods for the provision of resins to the wind turbine blades.

### BACKGROUND

Modern wind turbine blades typically include an outer aerodynamic shell that is supported by a structural member within the shell. The structural member can be built up by a composite laminate, often made from glass and/or carbon. For interconnecting the laminate of the structural member, a resin is used. The resin may ensure stability of the laminate to support stability of the blade.

For providing the resin to the laminate, vacuum assisted resin infusion (VARI) is used. Thereby, the resin is provided to the laminate under vacuum conditions and cured afterwards. The resin can be provided by an infusion machine whereby the resin is provided to a central distributor that is placed away from the blade, e.g. on the floor next to the infusion machine, and provides the resin to the blade structure by long tubes. To stop resin provision, a binary guillotine type mechanism is used, i.e. the tubes are crushed such that the tubes disallow a flow of resin from the central distributor to the blade.

Since blade sizes have been increased over the years, this process becomes more and more challenging as regards a reliable provision of the resin to the large area of the laminate. Further, the process is related to high material costs, a high amount of waste and high efforts for cleaning. Additionally, no fine regulation for the provision of the resin is possible. US 2021/0101351 A1 describes a system for resin transfer moulding of composite articles. US 2014/0333008 A1 describes a system for feeding a fluid to a mold for molding a reinforced composite structure. US 2012/0024457 A1 describes a system for bonding wind turbine blades. CN 214000632 U describes a fully-closed automatic vacuum infusion system for wind power blades.

In light of the above, it is beneficial to provide improved apparatuses, systems and methods for the manufacture of wind turbine blades.

### SUMMARY

According to an aspect of the present disclosure, an apparatus for the manufacture of a wind turbine blade including a mold is provided. The mold is provided under vacuum conditions. The apparatus includes an infusion machine for providing a resin, the infusion machine including a main hose, and a manifold, the manifold being in fluid connection with the main hose to receive the resin from the infusion machine. The manifold includes a sub-hose including a first end and a second end, wherein the first end is in fluid connection with the manifold, a valve being in fluid connection with the second end of the sub-hose , a measuring device for measuring a process parameter value, and an inlet being in fluid connection with the valve for providing the resin from the manifold to the mold, wherein the apparatus comprises a support structure for providing the manifold within the mold and adjacent to a surface of the mold.

According to a further aspect, a system for the manufacture of a wind turbine blade including a mold is provided. The system includes an apparatus according to embodiments described herein and a vacuum maintaining structure for providing a vacuum at the mold.

According to a further aspect, a method for manufacturing a wind turbine blade including a mold is provided. The method includes pumping a resin from an infusion machine comprising a pump via a main hose to a manifold, distributing the resin from the manifold to the mold via a sub-hose being in fluid connection with a valve; and measuring a process parameter value adjacent to the valve, wherein the method is carried out by an apparatus according to the embodiments described herein.

Embodiments are also directed at apparatuses for carrying out the disclosed methods and include apparatus parts for performing each described method aspect. These method aspects may be performed by way of hardware components, a computer programmed by appropriate software, by any combination of the two or in any other manner. Furthermore, embodiments according to the present disclosure are also directed at methods for operating the described apparatus. It includes method aspects for carrying out every function of the apparatus.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Fig. 1: shows an apparatus according to embodiments described herein;
- Fig. 2: shows an apparatus according to embodiments described herein;
- Fig. 3: shows a system according to embodiments described herein; and
- Fig. 4: shows a flow diagram of a method according to embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

Within the following description of the drawings, the same reference numbers refer to the same or similar components. Generally, only the differences with respect to the individual embodiments are described. Unless specified otherwise, the description of a part or aspect in one applies to a corresponding part or aspect in another embodiment as well.

The manufacture of wind turbine blades can be challenging due to several factors. Generally, molds including stacked laminate layers can be used. The stacked laminate layers can be interconnected to provide stability to the manufactured blade. Such interconnection may be provided by a connection material, e.g. a glue-like or resin-like material. Further, wind turbine blades may include a large size, i.e. lengths of several tenths of meters can be achieved. Further, the amount of materials used and thus, also the costs of material can be very high. Further, a high amount of waste material can be produced as well as cleaning and maintenance of the apparatus can be challenging.

In light of the above and according to embodiments described herein, an apparatus for the manufacture of a wind turbine blade including a mold is provided. The mold is provided under vacuum conditions. The apparatus includes an infusion machine for providing a resin. The infusion machine includes a main hose and a manifold, and the manifold is in fluid connection with the main hose to receive the resin from the infusion machine. The manifold may provide the resin to the mold. The resin can enter the mold at an inlet.

As used throughout this disclosure, a "mold" can be understood as a preformed casting made from a particular material suitable for wind turbine blades. For example, the mold or shell mold may be a composite structure. The mold or shell mold, i.e. the composite structure may include or be made from fiberglass, a balsa core and/or a foam core and a polyester resin and/or epoxy resin and/or combinations thereof. Further, the mold may be a sheet metal mold, e.g. in case a component with a simple geometry may be formed. The mold may include an outer shell and a plurality of stacked laminate layers thereon. The laminate may be made from carbon. The mold may have a length of several tenths of meters, particularly 10 m or more, more particularly 50 m or more, even more particularly 100 m or more, e.g. 107 m. The mold may include a surface. The mold and/or the surface may be pre-bent. The mold may have a maximum cross-sectional length or maximum width of between 4 and 5 m, particularly 4.5 m. Accordingly, a root diameter may be 4.5 m. The width may taper at one end and along the length of the mold. Further, two molds may be connected to provide one blade.

According to embodiments described herein, a vacuum may be provided at the mold, i.e. the mold may be provided under vacuum conditions. The term "vacuum" may be understood as a negative process pressure, i.e. a pressure between -0.1 and -1.0 bar. Particularly, a pressure between -0.3 to -0.95 bar may be used across the manufacturing process, e.g. during different stages of the manufacturing process. Accordingly, at any stage of the process, a pressure between -0.3 to -0.95 bar may be applied. During manufacture, different vacuum levels, i.e. different pressure values, may be used to control process quality. Particularly, a vacuum may be provided at the mold. A vacuum maintaining structure may be arranged at the mold such that the mold can be provided with a particular pressure at any time point throughout the manufacturing process. A vacuum state at the mold and/or particular areas of the mold may be a measure for process quality and/or process progress.

As used throughout this disclosure, a "resin" can be understood as a material to connect a plurality of laminate layers. The resin may be a material selected from the group consisting of a polyester, a vinyl ester, epoxy and/or combinations thereof. Further, with "resin" a mixture of a resin and a hardener may be understood, the hardener being selected from the group consisting of e.g. peroxide, epoxides and/or combinations thereof. The resin may include a mixture ratio of resin and hardener in the range of 100:25, particularly 100:35, Additionally or alternatively, the mixture may include between 1% to 35 % of hardener.

As used throughout this disclosure, the term "hose" may be synonymously used with the term "tube" and vice versa.

According to embodiments described herein, the apparatus includes an infusion machine. The infusion machine may be configured to provide a resin to the mold for connecting a plurality of stacked laminate layers. The infusion machine may include one or more pumps for providing the resin to the mold. Particularly, the infusion machine may include one or more pumps for providing the resin and one or more pumps for providing a hardener. The infusion machine may further include a mixer to mix the resin and the hardener.

According to embodiments described herein, the infusion machine further includes a main hose and a manifold. The main hose or main tube may include the mixer for mixing the resin and the hardener. The mixer may be a mixing tube. The mixer may be provided adjacent to a first end of the main hose or main tube that may be connected to the infusion machine. The infusion machine may be in fluid connection with the manifold. The infusion machine may be connected to the manifold via the main hose or main tube. The main hose or main tube may include a second end being connected to the manifold. Accordingly, the infusion machine may be connected with the main hose or main tube and thus, may be connected to the manifold such that the infusion machine may provide the resin via the main hose to the manifold.

According to embodiments described herein, a ratio of resin and hardener may be used. The one or more pumps may be configured to provide the resin and/or the hardener in a preset volume to the mixer to achieve a preset ratio. The resin and the hardener may be mixed in the respective ratio in the mixer and provided to the manifold.

According to embodiments described herein, the manifold includes a sub-hose or sub-tube including a first end and a second end. The first end of the sub-hose is in fluid connection with the manifold. Accordingly, the resin can be provided from the infusion machine via the main hose to the manifold and from the manifold to the sub-hose or sub-tube. The manifold may be disposable. The manifold may include dimensions to fit within a dimension of the mold. For example, the manifold may be provided adjacent to the mold. Particularly, the apparatus may include a support structure for providing the manifold adjacent to a surface of the mold. The manifold may be configured to distribute the resin. Particularly, the manifold may be configured to distribute the resin along a length dimension of the manifold.

Advantageously, by providing the manifold within the mold and adjacent to the surface of the mold, the resin can be provided directly at the mold. Accordingly, a length of the sub-hoses or sub-tubes can be significantly shorter compared to the hoses or tubes conventionally used in the art. Accordingly, since the main tubes and/or the sub-tubes as well as the manifold are discarded after use, less material waste in terms of tubing material and resin material that may remain in the tubing material after the manufacture is discarded. Accordingly, less environmentally unfriendly material may be discarded. Thus, costs for waste disposal may be reduced.

According to embodiments described herein, the main hose may have a diameter between 1.905 cm (0.75 inches) and 5.08 cm (2 inches), particularly a diameter between 2 cm (0,79 inches) and 2.5 cm (0,98 inches) and/or a length of between 2 and 10 m, particularly a length between 5 m and 7 m, and the sub-hose may have a diameter between 0.635 cm (0.25 inches) and 3,81 cm (1.5 inches), particularly a diameter between 1 cm (0,39 inches) and 1.5 cm (0,59 inches), and/or a length of between 0.1 and 2 m, particularly a length between 1 and 2 m.

According to embodiments described herein, the manifold may have a length dimension including a plurality of openings along the length dimension for being connected to the first ends of a plurality of sub-hoses. Particularly, the manifold may be a hollow pipe having the length dimension. The manifold may include a plurality of sub-hoses or sub-tubes. The plurality of sub-hoses may be distributed over the length dimension of the manifold, e.g. corresponding to the plurality of openings. The length dimension of the manifold may fit within a cross-sectional length or width of the mold, particularly the length of the manifold may be smaller than the cross-sectional length or width of the mold. The manifold may be made from a material selected of the group consisting of a polymer, a plastic, a metal and/or combinations thereof.

According to embodiments described herein, the manifold includes a valve. The valve is in fluid connection with the second end of the sub-hose or sub-tube. Thus, the resin may be provided from the manifold via the sub-hose to the valve. The valve may be configured to let the resin flow to the mold and/or may be configured to prevent the resin from flowing to the mold. **In** particular, the valve may be configured to regulate a flow of resin towards the mold, i.e. the flow of resin to the mold may be adjusted by the valve. The manifold further includes an inlet being in fluid connection with the valve for providing the resin from the manifold to the mold. The inlet may be arranged at the mold, i.e. at a surface of the mold. The valve may be inserted between the first end of the sub-hose and the inlet.

According to embodiments described herein, the valve may include an actuator. The valve may be regulated by the actuator to be opened and/or closed. The actuator may e.g. be servo motor. The valve may be regulated according to a process parameter value. The valve may provide a fluid connection between the second end of the sub-hose and an inlet at the mold. **In** other words, the inlet is in fluid connection with the valve for providing the resin from the manifold to the mold. **In** other words, the resin may enter the mold at the inlet. The resin may enter to the plurality of stacked laminate layers of the mold. Accordingly, the valve may regulate the flow of resin from the infusion machine to the inlet at the mold, and particularly, the flow of resin from the manifold to the inlet at the mold or into the mold. Thus, a local regulation of resin provision may be regulated and/or adjusted at the inlet at the mold, i.e. an amount, pressure and/or flow speed of the resin can be regulated and/or adjusted locally at the inlet at the mold. The "inlet" as used herein, may include a tubing from the valve towards the mold as well as an opening and/or means for holding the inlet at the mold to provide the resin to the mold, i.e. to the plurality of stacked laminate layers.

According to embodiments described herein, the manifold may include the plurality of sub-hoses and a plurality of valves connected therewith. Further, the plurality of valves may be connected to a plurality of inlets. The plurality of valves and/or the plurality of inlets may be arranged at the mold, i.e. at the surface of the mold, and may be spaced apart from each other by a substantially similar distance over the surface of the mold. The plurality of valves may be distributed and/or spaced apart from each other by a substantially similar distance along a cross-sectional length of the mold or the surface of the mold.

According to embodiments described herein, the manifold may include two inlets, particularly six inlets, more particularly ten inlets, even more particularly sixteen inlets. Accordingly, the manifold may include two sub-hoses and two valves, particularly six sub-hoses and six valves, more particularly ten sub-hoses and ten valves, even more particularly sixteen sub-hoses and sixteen valves, to connect the respective number of inlets with the manifold.

According to embodiments described herein, the manifold further includes a measuring device for measuring a process parameter value. The measuring device may be arranged at the inlet. The measuring device may be configured to determine a process parameter value. The process parameter value may be selected from the group consisting of a pressure value, a flow speed or velocity, a volume and/or combinations thereof. Particularly, the process parameter value may be a value to provide information about a vacuum state at the inlet. The process parameter value may be a measure for a sufficiency of resin provided to the mold at the inlet. At each inlet, one measuring device may be arranged. Additionally or alternatively, one measuring device may be connected to a plurality of inlets and being configured to measure a process parameter value at each of the plurality of inlets. The measuring device may be a flow meter, a manometer, a volumetric meter and/or combinations thereof.

According to embodiments described herein, the measured process parameter value may be compared to a predetermined process parameter threshold value. The valve may be regulated according to a result of comparing the measured value and the threshold value. For example, the valve may be in an opened state. When the measured process parameter value is at or above the threshold value, the valve may remain open. When the measured process parameter value is below the threshold value, the valve may be (partially) closed to regulate the flow of resin from the manifold to the inlet at the mold. The regulation of the valve may also be vice versa, i.e. when the measured process parameter value is at or above the threshold value, the valve may be (partially) closed and when the measured process parameter value is below the threshold value, the valve may remain open. Accordingly, a provision of the resin, i.e. the flow of resin to the mold, may be regulated upon the comparison of the process parameter value with the predetermined process parameter threshold value.

Advantageously, the regulation of the valve at the inlet in accordance with the measured process parameter at the inlet provides for a local, independent provision of resin to the mold. Accordingly, the measured process parameter value may be an indicator for how far the resin provision process has already advanced. Thus, laminate quality can be increased. Further, overdosing of the resin at the stacked laminate layers where the respective inlet is provided, can be prevented and/or avoided. Thus, a more uniform distribution of the resin throughout the mold can be achieved.

According to embodiments described herein, a pumping speed of the one or more pumps may be regulated according to the measured process parameter value. Accordingly, the amount of material provided to the manifold and from there, to the sub-hoses may be regulated. Further, a pressure at the manifold may be regulated, i.e. by reducing the pumping speed, the pressure may be reduced and by increasing the pumping speed the pressure may be increased. Thus, a pressure at the sub-hoses may be regulated.

For example, the valve may be open such that resin is provided from the manifold to the inlet. The measuring device may measure a pressure value at the inlet. The pressure value may be below atmospheric pressure, i.e. the pressure value may indicate vacuum conditions at the inlet. The measured pressure value may be compared to a predetermined pressure threshold value. When the measured pressure value is below the threshold, i.e. when vacuum conditions are provided, the valve may remain open to further provide resin to the inlet and to the mold. When the measured pressure value is above the predetermined pressure threshold value, i.e. when vacuum conditions are impaired, the valve may be closed or partially closed to restrict a flow of resin to the inlet and thus, to the mold. The vacuum conditions at the inlet may thus be an indicator for the amount of resin at the mold.

According to embodiments described herein, the apparatus may further include a controller. The controller may be configured to regulate the valve, particularly according to the process parameter value measured by the measuring device and provided to the controller. The controller may be connected to the valve and/or the measuring device, i.e. the controller may be in communication with the measuring device and the valve for receiving the process parameter value from the measuring device and for regulating the valve. Particularly, the controller may be connected to the actuator of the valve. The controller may be connected by a wired connection and/or by a wireless connection to the valve and/or the measuring device.

Advantageously, the valve may be controlled according to the process parameter value provided from the measuring device such that at any point in time, a particular or specific amount of resin can be provided at the inlet. Further particularly, fine-tuning of the resin flow can be achieved. Therefore, regulation of the apparatus can be facilitated and more accurate.

According to embodiments described herein, the controller may be configured to carry out a comparison of the provided process parameter value with a predetermined process parameter threshold value. The controller may be configured to regulate a flow state of the valve according to the comparison of the provided process parameter value with the predetermined process parameter threshold value. The flow state of the valve may be understood in that the valve may be partially opened and/or closed, i.e. the valve may be opened and/or closed to such degree that a specific flow of resin can be provided. The controller may further be configured to regulate the one or more pumps of the infusion machine. Particularly, the controller may be configured for regulating a pumping speed of the pump according to the provided process parameter value.

According to embodiments described herein, the predetermined process parameter threshold value may be selected from the group consisting of pressure value, a flow speed or flow velocity, a volume and/or combinations thereof. Particularly, the predetermined process parameter threshold value may be a predetermined pressure threshold value.

According to embodiments described herein, a system including an apparatus according to any of the embodiments described herein may be provided. The system includes a vacuum maintaining structure for providing a vacuum at the mold. The vacuum maintaining structure may be a foil, a vacuum bag, and the like. The mold may be packed or wrapped with the vacuum maintaining structure.

According to embodiments described herein, the system may include a plurality of the apparatuses as described according to any of the embodiments described herein. Accordingly, the system may include a plurality of infusion machines and a plurality of manifolds. The plurality of manifolds may be distributed along the length of the mold, particularly, the each of the plurality of manifolds may be spaced apart from each other by a similar distance. Thus, a uniform distribution of the resin over the whole mold can be ensured. Since each of the plurality of manifolds may include a plurality of sub-hose to provide the resin to the surface of the mold, a large area may receive the resin simultaneously. The controller may be connected to the plurality of apparatuses to regulate the plurality of apparatuses.

Advantageously, since additionally, the provision of the resin can be regulated locally at the respective sub-hoses and/or inlets, the resin may not only be uniformly provided at one manifold but may be uniformly provided over the total length and/or width of the mold.

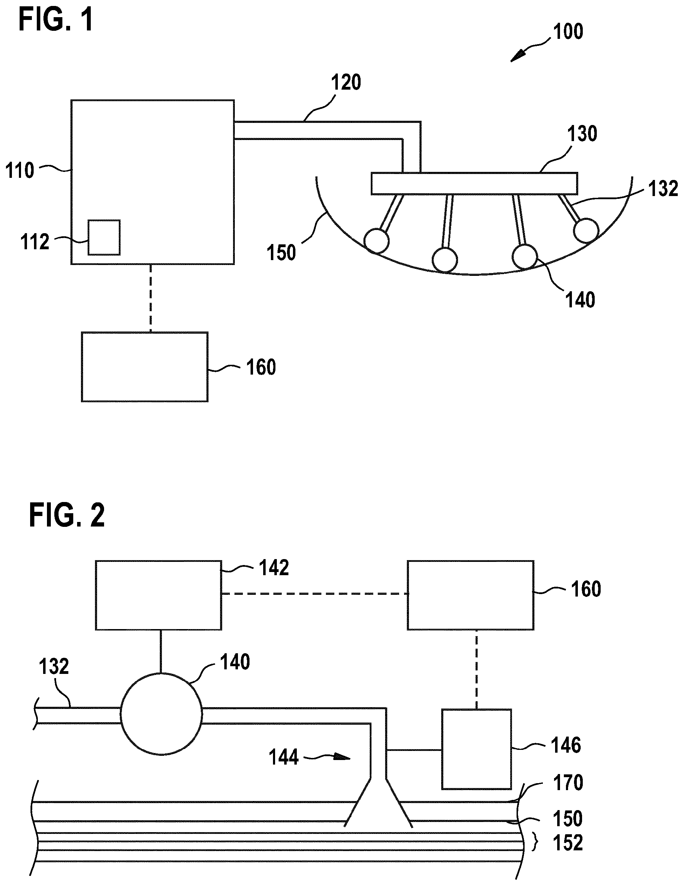

According to embodiments described herein and as exemplarily shown in Fig. 1, the apparatus 100 includes an infusion machine 110 including a main hose 120 and a manifold 130. The main hose 120 is connected to the infusion machine 110 and to the manifold 130 to provide a resin from the infusion machine to the manifold. The manifold may distribute the resin to the mold 150. The infusion machine may further include one or more pumps 112. The one or more pumps may provide the resin (and a hardener) from the infusion machine via the main hose 120 the manifold 130. The main tube may include a mixer to mix the resin and the hardener, particularly in a particular ratio. The manifold includes a sub-hose 132, particularly a plurality of sub-hoses, having a first end and a second end to receive the resin from the manifold and to provide the resin towards the mold, i.e. the first end may be connected to the manifold and the second end may be connected to a valve 140. The valve may be connected to an inlet. The inlet may be provided at a surface of the mold to provide the resin to the mold. The infusion machine may be connected to a controller 160. Particularly, the controller 160 may be connected to the one or more pumps 112 to regulate the one or more pumps.

According to embodiments described herein and as exemplarily shown in Fig. 2, the valve 140 being connected to the sub-hose 132 may be in fluid connection with an inlet 144. The valve may include an actuator 142. The inlet may provide the resin to the mold. In other words, the resin may enter the mold 150 at the inlet 144. The resin may enter to a plurality of stacked laminate layers 152. Further, a vacuum maintaining structure 170 may be provided at the mold 150 for providing a vacuum at the mold. The inlet 144 may further be connected to the measuring device 146 such that a process parameter value may be measured at the inlet. For example, a pressure value may be measured. The measuring device 146 and the actuator 142 may be connected to a controller 160 such that the controller may regulate the measuring device and/or the valve or the actuator. For example, the measuring device may forward measured process parameter values to the controller.

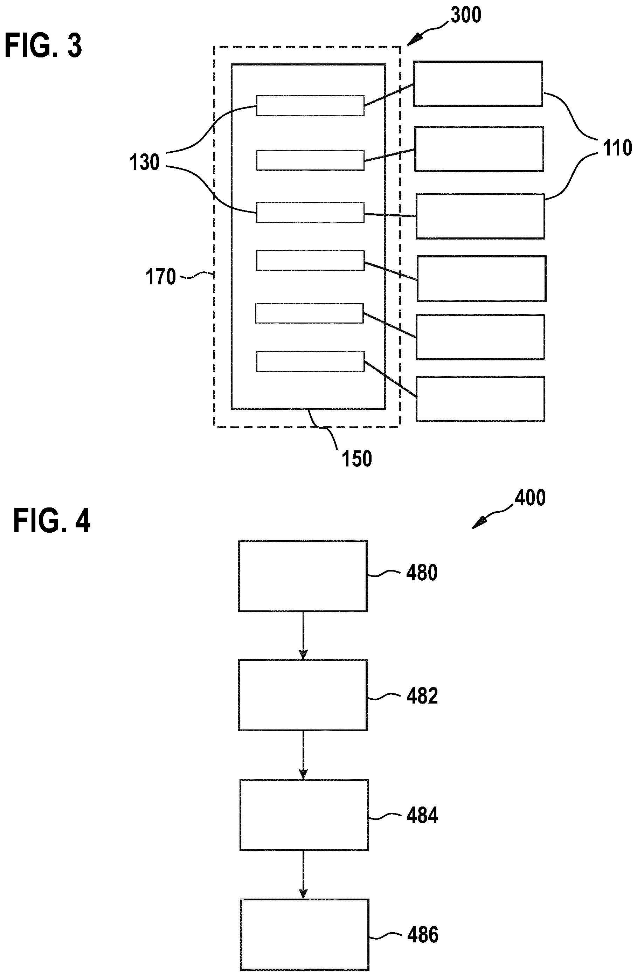

According to embodiments described herein and as exemplarily shown in Fig. 3, a system for the manufacture of a wind turbine blade is provided. The system includes the apparatus according to any of the embodiments or combinations of embodiments described herein and a vacuum maintaining structure 170 for providing a vacuum at the mold 150. The system may include a plurality of apparatuses as described according to any of the embodiments herein. Particularly, the system may include a plurality of the infusion machine 110 and a plurality of the manifold 130. The plurality of manifolds may be distributed along a length of the mold 150 such that the resin may be provided over the total length of the mold. Each of the plurality of manifolds may be connected to one infusion machine of the plurality of infusion machines.

According to embodiments described herein and as exemplarily shown in Fig. 4, a method for the manufacture of a wind turbine blade is provided. The method 400 includes pumping (indicated by box 480 in Fig. 4) a resin from an infusion machine including a pump via a main hose to a manifold, distributing (indicated by box 482 in Fig. 4) the resin from the manifold to the mold via a sub-hose being in fluid connection with a valve, measuring (indicated by box 484 in Fig. 4) a process parameter value adjacent to the valve; and may include providing (indicated by box 486 in Fig. 4) the processing parameter value to a controller.

According to embodiments described herein, the resin, particularly the resin with/and a hardener, may be pumped from the infusion machine to the manifold. The resin may be mixed at a mixer provided at the main hose through which the resin may provided to the manifold. The resin may be provided from the manifold via the sub-hose, particularly via a plurality of sub-hoses to the mold. Particularly, the resin may be provided to an inlet of the manifold to the mold, i.e. a surface of the mold.

According to embodiments described herein, the method may include regulating the valve with the controller according to the process parameter value provided to the controller. Particularly, regulating the valve with the controller may include the controller to carry out comparing the provided processing parameter value to a predetermined process parameter threshold value, evaluating whether the processing parameter value is above or below the predetermined process parameter threshold value, determining a decision according to the evaluation, and regulating a flow state of the valve according to the determined decision. The process parameter value and/or the process parameter threshold value may be selected according to the embodiments described herein.

According to embodiments described herein, the method may further include regulating a pumping speed of the pump according to the process parameter value provided to the controller. Accordingly, the provision of resin to the mold may be regulated by regulating the valve at the inlet and/or by regulating the pump for providing the resin to the manifold and to the mold. According to embodiments described herein, the method may be carried out by the apparatus according to any of the embodiments as described herein.

In light of the above, advantageously, apparatuses, systems and methods for an improved and facilitated manufacture of wind turbine blades is provided. Particularly, the provision of a resin to a wind turbine blade mold may be more cost effective, accurate and environmental friendlier. Further, less waste material is created. Additionally, the quality of providing a laminate for a wind turbine blade is increased and fine-tuning of previously uncontrollable process variables is ensured.

While the foregoing is directed to embodiments of the disclosure, other and further embodiments of the disclosure may be devised without departing from the basic scope thereof, and the scope thereof is determined by the claims that follow.

## Claims

1. An apparatus (100) for the manufacture of a wind turbine blade comprising a mold (150), the mold being provided under vacuum conditions, the apparatus comprising:
an infusion machine (110) for providing a resin, the infusion machine comprising a main hose (120); and
a manifold (130), the manifold being in fluid connection with the main hose (120) to receive the resin from the infusion machine, the manifold (130) comprising:
a sub-hose (132) comprising a first end and a second end, wherein the first end is in fluid connection with the manifold (130);
a valve (140) being in fluid connection with the second end of the sub-hose (132);
a measuring device (146) for measuring a process parameter value; and
an inlet (144) being in fluid connection with the valve for providing the resin from the manifold to the mold;
**characterised in that** the apparatus comprises a support structure for providing the manifold (130) within the mold (150) and adjacent to a surface of the mold (150).

2. The apparatus (100) according to claim 1, wherein the apparatus further comprises a controller (160), the controller being configured to regulate the valve according to the process parameter value measured by the measuring device and provided to the controller.

3. The apparatus (100) according to claim 2, wherein the controller (160) is in communication with the measuring device (146) and the valve (140) for receiving the process parameter value from the measuring device and for regulating the valve.

4. The apparatus (100) according to any of claims 2 or 3, wherein the controller (160) is configured to carry out a comparison of the provided process parameter value with a predetermined process parameter threshold value and is configured to regulate a flow state of the valve (140) according to the comparison of the provided process parameter value with the predetermined process parameter threshold value.

5. The apparatus (100) according to any of claims 1 to 4, wherein the valve (140) comprises an actuator (142) for opening and/or closing the valve (140).

6. The apparatus (100) according to claim 5, wherein the controller is configured to regulate the actuator (142).

7. The apparatus (100) according to any of claims 2 to 6, wherein the infusion machine (110) comprises a pump (112) for providing the resin to the manifold and wherein the controller is configured for regulating a pumping speed of the pump (112) according to the provided process parameter value.

8. The apparatus (100) according to any of claims 1 to 7, wherein the measuring device (146) is arranged at the inlet (144) and wherein the process parameter value is a pressure value measured at the inlet.

9. The apparatus (100) according to any of claims 1 to 8, wherein the manifold (130) is disposable.

10. The apparatus (100) according to any of claims 1 to 9, wherein the main hose (120) has a diameter between 1.905 cm (0.75 inches) and 5.08 cm (2 inches) and/or a length of between 2 and 10 m and wherein the sub-hose (132) has a diameter between 0.635 (0.25 inches) and 3,81 cm (1.5 inches) and/or a length of between 0.1 and 2 m.

11. The apparatus (100) according to any of claims 1 to 10, wherein the manifold (130) comprises a plurality of sub-hoses and a plurality of valves connected therewith, the plurality of valves being spaced apart from each other by a substantially similar distance over a surface of the mold.

12. A system (300) for the manufacture of a wind turbine blade comprising a mold (150), the system comprising:
an apparatus (100) according to any of claims 1 to 11; and
a vacuum maintaining structure (170) for providing a vacuum at the mold.

13. A method for manufacturing a wind turbine blade comprising a mold (150), the method comprising:
pumping a resin from an infusion machine comprising a pump via a main hose to a manifold;
distributing the resin from the manifold to the mold via a sub-hose being in fluid connection with a valve; and
measuring a process parameter value adjacent to the valve;
**characterised in that** the method is carried out by the apparatus according to any of claims 1 to 11.

14. The method according to claim 13, wherein the method further comprises providing the processing parameter value to a controller and regulating the valve with the controller according to the process parameter value provided to the controller, particularly wherein regulating the valve with the controller comprises carrying out by the controller:
comparing the provided processing parameter value to a predetermined process parameter threshold value;
evaluating whether the processing parameter value is above or below the predetermined process parameter threshold value;
determining a decision according to the evaluation; and
regulating a flow state of the valve according to the determined decision.

15. The method according to claims 13 or 14, wherein the method further comprises regulating a pumping speed of the pump according to the process parameter value provided to the controller.

## Patentansprüche

1. Vorrichtung (100) zur Herstellung eines Windturbinenblatts, umfassend eine Form (150), wobei die Form unter Vakuumbedingungen bereitgestellt ist, wobei die Vorrichtung umfasst:
eine Infusionsmaschine (110) zum Bereitstellen eines Harzes, wobei die Infusionsmaschine einen Hauptschlauch (120) umfasst; und
einen Verteiler (130), wobei der Verteiler in Fluidverbindung mit dem Hauptschlauch (120) steht, um das Harz von der Infusionsmaschine zu empfangen, wobei der Verteiler (130) umfasst: einen Teilschlauch (132), der ein erstes Ende und ein zweites Ende umfasst, wobei das erste Ende in Fluidverbindung mit dem Verteiler (130) steht;
ein Ventil (140), das in Fluidverbindung mit dem zweiten Ende des Teilschlauchs (132) steht; eine Messvorrichtung (146) zum Messen eines Prozessparameterwerts; und
einen Einlass (144), der in Fluidverbindung mit dem Ventil steht, um das Harz von dem Verteiler an die Form bereitzustellen;
**dadurch gekennzeichnet, dass** die Vorrichtung eine Tragstruktur zum Bereitstellen des Verteilers (130) innerhalb der Form (150) und angrenzend an eine Oberfläche der Form (150) umfasst.

2. Vorrichtung (100) nach Anspruch 1, wobei die Vorrichtung ferner eine Steuerung (160) umfasst, wobei die Steuerung dazu eingerichtet ist, das Ventil gemäß dem durch die Messvorrichtung gemessenen und der Steuerung bereitgestellten Prozessparameterwert zu regeln.

3. Vorrichtung (100) nach Anspruch 2, wobei die Steuerung (160) in Kommunikation mit der Messvorrichtung (146) und dem Ventil (140) steht, um den Prozessparameterwert von der Messvorrichtung zu empfangen und um das Ventil zu regeln.

4. Vorrichtung (100) nach einem der Ansprüche 2 oder 3, wobei die Steuerung (160) dazu eingerichtet ist, einen Vergleich des bereitgestellten Prozessparameterwerts mit einem vorgegebenen Prozessparameter-Schwellenwert durchzuführen, und dazu eingerichtet ist, einen Strömungszustand des Ventils (140) gemäß dem Vergleich des bereitgestellten Prozessparameterwerts mit dem vorgegebenen Prozessparameter-Schwellenwert zu regeln.

5. Vorrichtung (100) nach einem der Ansprüche 1 bis 4, wobei das Ventil (140) einen Aktor (142) zum Öffnen und/oder Schließen des Ventils (140) umfasst.

6. Vorrichtung (100) nach Anspruch 5, wobei die Steuerung dazu eingerichtet ist, den Aktor (142) zu regeln.

7. Vorrichtung (100) nach einem der Ansprüche 2 bis 6, wobei die Infusionsmaschine (110) eine Pumpe (112) zum Bereitstellen des Harzes an den Verteiler umfasst und wobei die Steuerung zum Regeln einer Pumpgeschwindigkeit der Pumpe (112) gemäß dem bereitgestellten Prozessparameterwert eingerichtet ist.

8. Vorrichtung (100) nach einem der Ansprüche 1 bis 7, wobei die Messvorrichtung (146) an dem Einlass (144) angeordnet ist und wobei der Prozessparameterwert ein an dem Einlass gemessener Druckwert ist.

9. Vorrichtung (100) nach einem der Ansprüche 1 bis 8, wobei der Verteiler (130) zum einmaligen Gebrauch bestimmt ist.

10. Vorrichtung (100) nach einem der Ansprüche 1 bis 9, wobei der Hauptschlauch (120) einen Durchmesser zwischen 1,905 cm (0,75 Zoll) und 5,08 cm (2 Zoll) und/oder eine Länge zwischen 2 und 10 m aufweist und wobei der Teilschlauch (132) einen Durchmesser zwischen 0,635 cm (0,25 Zoll) und 3,81 cm (1,5 Zoll) und/oder eine Länge zwischen 0,1 und 2 m aufweist.

11. Vorrichtung (100) nach einem der Ansprüche 1 bis 10, wobei der Verteiler (130) eine Vielzahl von Teilschläuchen und eine Vielzahl von damit verbundenen Ventilen umfasst, wobei die Vielzahl von Ventilen über eine Oberfläche der Form im Wesentlichen im gleichen Abstand voneinander beabstandet ist.

12. System (300) zur Herstellung eines Windturbinenblatts, das eine Form (150) umfasst, wobei das System umfasst:
eine Vorrichtung (100) nach einem der Ansprüche 1 bis 11; und
eine Vakuumaufrechterhaltungsstruktur (170) zum Bereitstellen eines Vakuums an der Form.

13. Verfahren zur Herstellung eines Windturbinenblatts, das eine Form (150) umfasst, wobei das Verfahren umfasst:
Pumpen eines Harzes von einer Infusionsmaschine, die eine Pumpe umfasst, über einen Hauptschlauch zu einem Verteiler;
Verteilen des Harzes von dem Verteiler an die Form über einen Teilschlauch, der in Fluidverbindung mit einem Ventil steht; und
Messen eines Prozessparameterwerts angrenzend an das Ventil;
**dadurch gekennzeichnet, dass** das Verfahren durch die Vorrichtung nach einem der Ansprüche 1 bis 11 durchgeführt wird.

14. Verfahren nach Anspruch 13, wobei das Verfahren ferner ein Bereitstellen des Prozessparameterwerts an eine Steuerung und ein Regeln des Ventils mit der Steuerung gemäß dem der Steuerung bereitgestellten Prozessparameterwert umfasst, insbesondere wobei das Regeln des Ventils mit der Steuerung ein Durchführen durch die Steuerung umfasst:
Vergleichen des bereitgestellten Prozessparameterwerts mit einem vorgegebenen Prozessparameter-Schwellenwert;
Auswerten, ob der Prozessparameterwert über oder unter dem vorgegebenen Prozessparameter-Schwellenwert liegt; Bestimmen einer Entscheidung gemäß der Auswertung; und
Regeln eines Strömungszustands des Ventils gemäß der bestimmten Entscheidung.

15. Verfahren nach den Ansprüchen 13 oder 14, wobei das Verfahren ferner ein Regeln einer Pumpgeschwindigkeit der Pumpe gemäß dem der Steuerung bereitgestellten Prozessparameterwert umfasst.

## Revendications

1. Appareil (100) destiné à la fabrication d'une pale d'éolienne comprenant un moule (150), le moule étant prévu dans des conditions de vide, l'appareil comprenant :
une machine à infusion (110) destinée à fournir une résine, la machine à infusion comprenant un tuyau principal (120) ; et
un collecteur (130), le collecteur étant en raccordement fluidique avec le tuyau principal (120) pour recevoir la résine à partir de la machine à infusion, le collecteur (130) comprenant :
un tuyau secondaire (132) comprenant une première extrémité et une seconde extrémité, dans lequel la première extrémité est en raccordement fluidique avec le collecteur (130) ;
une vanne (140) qui est en raccordement fluidique avec la seconde extrémité du tuyau secondaire (132) ;
un dispositif de mesure (146) destiné à mesurer une valeur de paramètre de processus ; et
une entrée (144) qui est en raccordement fluidique avec la vanne pour fournir la résine à partir du collecteur au moule ;
**caractérisé en ce que** l'appareil comprend une structure de support destinée à mettre le collecteur (130) à l'intérieur du moule (150) et à côté d'une surface du moule (150).

2. Appareil (100) selon la revendication 1, dans lequel l'appareil comprend en outre un régulateur (160), le régulateur étant conçu pour réguler la vanne selon la valeur de paramètre de processus mesurée par le dispositif de mesure et fournie au régulateur.

3. Appareil (100) selon la revendication 2, dans lequel le régulateur (160) est en communication avec le dispositif de mesure (146) et la vanne (140) pour recevoir la valeur de paramètre de processus à partir du dispositif de mesure et pour réguler la vanne.

4. Appareil (100) selon l'une quelconque des revendications 2 ou 3, dans lequel le régulateur (160) est conçu pour mettre en œuvre une comparaison de la valeur de paramètre de processus fournie avec une valeur seuil de paramètre de processus prédéterminée, et est conçu pour réguler un état d'écoulement de la vanne (140) selon la comparaison de la valeur de paramètre de processus fournie avec la valeur seuil de paramètre de processus prédéterminée.

5. Appareil (100) selon l'une quelconque des revendications 1 à 4, dans lequel la vanne (140) comprend un actionneur (142) destiné à ouvrir et/ou fermer la vanne (140).

6. Appareil (100) selon la revendication 5, dans lequel le régulateur est conçu pour réguler l'actionneur (142).

7. Appareil (100) selon l'une quelconque des revendications 2 à 6, dans lequel la machine à infusion (110) comprend une pompe (112) destinée à fournir la résine au collecteur et dans lequel le régulateur est conçu pour réguler une vitesse de pompage de la pompe (112) selon la valeur de paramètre de processus fournie.

8. Appareil (100) selon l'une quelconque des revendications 1 à 7, dans lequel le dispositif de mesure (146) est disposé au niveau de l'entrée (144) et dans lequel la valeur de paramètre de processus est une valeur de pression mesurée au niveau de l'entrée.

9. Appareil (100) selon l'une quelconque des revendications 1 à 8, dans lequel le collecteur (130) est jetable.

10. Appareil (100) selon l'une quelconque des revendications 1 à 9, dans lequel le tuyau principal (120) a un diamètre compris entre 1,905 cm (0,75 pouce) et 5,08 cm (2 pouces) et/ou une longueur comprise entre 2 et 10 m, et dans lequel le tuyau secondaire (132) a un diamètre compris entre 0,635 (0,25 pouce) et 3,81 cm (1,5 pouce) et/ou une longueur comprise entre 0,1 et 2 m.

11. Appareil (100) selon l'une quelconque des revendications 1 à 10, dans lequel le collecteur (130) comprend une pluralité de tuyaux secondaires et une pluralité de vannes raccordées à ceux-ci, la pluralité de vannes étant espacées les unes des autres d'une distance sensiblement similaire sur une surface du moule.

12. Système (300) destiné à la fabrication d'une pale d'éolienne comprenant un moule (150), le système comprenant :
un appareil (100) selon l'une quelconque des revendications 1 à 11 ; et
une structure de maintien de vide (170) destinée à fournir un vide au niveau du moule.

13. Procédé de fabrication d'une pale d'éolienne comprenant un moule (150), le procédé comprenant :
le pompage d'une résine à partir d'une machine à infusion comprenant une pompe par l'intermédiaire d'un tuyau principal vers un collecteur ; la distribution de la résine à partir du collecteur vers le moule par l'intermédiaire d'un tuyau secondaire en raccordement fluidique avec une vanne ; et
la mesure d'une valeur de paramètre de processus à côté de la vanne ;
**caractérisé en ce que** le procédé est mis en œuvre par l'appareil selon l'une quelconque des revendications 1 à 11.

14. Procédé selon la revendication 13, dans lequel le procédé comprend en outre la fourniture de la valeur de paramètre de processus à un régulateur et la régulation de la vanne à l'aide du régulateur selon la valeur de paramètre de processus fournie au régulateur, en particulier, dans lequel la régulation de la vanne à l'aide du régulateur comprend la mise en œuvre, par le régulateur, de :
la comparaison de la valeur de paramètre de processus fournie avec une valeur seuil de paramètre de processus prédéterminée ;
l'évaluation du fait que la valeur de paramètre de processus est supérieure ou inférieure à la valeur seuil de paramètre de processus prédéterminée ;
la détermination d'une décision en fonction de l'évaluation ; et
la régulation d'un état d'écoulement de la vanne selon la décision déterminée.

15. Procédé selon les revendications 13 ou 14, dans lequel le procédé comprend en outre la régulation d'une vitesse de pompage de la pompe selon la valeur de paramètre de processus fournie au régulateur.
